Europäisches Patentamt

European Patent Office

Office européen des brevets

(19)

(11) **EP 0 562 993 B1**

(12) **FASCICULE DE BREVET EUROPEEN**

(45) Date de publication et mention
de la délivrance du brevet:
**02.01.1997 Bulletin 1997/01**

(51) Int Cl.⁶: **G07C 1/30**, G07B 15/02,
G07F 7/08

(21) Numéro de dépôt: **93460013.1**

(22) Date de dépôt: **26.03.1993**

(54) **Procédé de formatage de la mémoire d'un objet portatif de mémorisation d'unités consommables**

Verfahren zum Formatieren des Speichers eines verbrauchbare Einheiten speichernden tragbaren Objektes

Method for formatting the memory of a portable device memorizing consumable units

(84) Etats contractants désignés:
**AT BE CH DE DK ES GB IE IT LI LU NL SE**

(30) Priorité: **27.03.1992 FR 9204136**

(43) Date de publication de la demande:
**29.09.1993 Bulletin 1993/39**

(73) Titulaire: **HELLO S.A.**
**F-75002 Paris (FR)**

(72) Inventeurs:
• **Ilie, François**
**F-75011 Paris (FR)**

• **Marechal, Alain**
**F-75004 Paris (FR)**

(74) Mandataire: **Dupuis-Latour, Dominique et al**
**Avocats à la Cour,**
**Cabinet Bardehle, Pagenberg & Partner,**
**45, avenue Montaigne**
**75008 Paris (FR)**

(56) Documents cités:
EP-A- 0 193 635          EP-A- 0 352 170
EP-A- 0 380 377          EP-A- 0 402 821
EP-A- 0 463 557          FR-A- 2 503 423
FR-A- 2 615 304

## Description

La présente invention concerne un procédé de formatage de la mémoire d'un objet portatif de mémorisation d'unités consommables.

Par "objet portatif de mémorisation d'unités consommables" on entend notamment, par exemple, une carte à mémoire, du type comprenant une mémoire électronique de mémorisation de données et des microcircuits logiques de gestion de la mémoire électronique.

La présente invention peut être appliquée de façon générale chaque fois qu'il y a lieu de comptabiliser une durée, par consommation d'un crédit d'unités de durée préalablement alloué à un usager, et selon une politique de débit prédéterminée.

Elle s'applique en particulier à la comptabilisation d'unités de durée de stationnement payant, ou réglementé.

On entend par "système de comptabilisation d'unités de durée de stationnement", un appareil constitué par exemple par un boîtier, préférentiellement portable, destiné à être posé derrière le pare-brise d'un véhicule et coopérant avec un ticket électronique prépayé, par exemple une carte à mémoire, pour décrémenter des unités de taxe mémorisées sur la carte, en fonction de la zone et de la durée du stationnement. Ce type de dispositif permet de s'affranchir de l'utilisation de bornes fixes individuelles (du type des parcmètres de trottoir) ou collectives (du type des horodateurs). L'utilisateur acquitte automatiquement des taxes de stationnement par introduction d'une carte à mémoire prépayée dans son boîtier. Les boîtiers sont généralement vendus, prêtés ou loués par des collectivités locales ou leurs mandataires, qui commercialisent des unités de stationnement, sous forme de cartes d'un type différent pour chaque aire de validité distincte, en l'occurence pour chaque collectivité locale. La régularité du stationnement peut être vérifiée grâce à un afficheur sur lequel apparaissent les diverses informations nécessaires au personnel de contrôle, par exemple le numéro de zone de stationnement sélectionné par l'utilisateur, un code identifiant notamment le type de carte introduite par l'utilisateur dans le boîtier et représentatif de la ville de stationnement, et le cas échéant une information indicative d'une situation d'infraction, et le nombre d'unités de taxes encore disponibles sur la carte. Les mémoires des cartes peuvent être réinscriptibles ou inscrites irréversiblement.

Un tel dispositif est par exemple décrit dans le document FR-A-2 615 304 . Le dispositif décrit dans ce document est un boîtier destiné à recevoir des cartes à mémoire contenant des crédits d'unités de stationnement. Le boîtier comprend des moyens de couplage électrique avec chaque carte qui y est introduite, et un circuit d'écriture. Ce circuit d'écriture permet l'inscription irréversible d'une position mémoire électronique de la carte introduite dans le boîtier, ce circuit étant déclenché selon un tarif de consommation fonction de l'heure et du lieu, de sorte que les inscriptions successives des positions mémoire de la carte introduites dans le boîtier correspondent à la consommation progressive, au fur et à mesure de l'écoulement du temps, du crédit d'unités de stationnement subsistant dans la carte.

Le document EP-A-0 402 821 décrit un dispositif de comptabilisation d'unités de stationnement coopérant avec une carte de mémorisation d'unités consommables. Ce dispositif commande la consommation des unités selon une politique de stationnement tarifé prédéterminée comprenant au moins un tarif de consommation suivant le lieu et/ou le temps de stationnement. Il est prévu d'encoder cette politique de stationnement dans la mémoire de la carte. Il est notamment prévu de stocker dans la mémoire des taux et limites horaires groupés en fonction de zones de stationnement. Plus d'un taux horaire et plus d'une limite horaire peuvent être stockés dans la carte pour chaque zone de stationnement, le taux pouvant par exemple varier en fonction de la durée de stationnement ou de l'heure de début de stationnement.

Or, on sait que chaque collectivité locale possède sa propre politique de consommation des unités de stationnement. Une telle politique de consommation est généralement composée de plusieurs tarifs correspondant aux différents cas possibles de consommation, fonction du jour, de l'heure, de la durée et du lieu. Un tarif doit donc décrire complètement :

- les périodes payantes ou gratuites en fonction du jour et de l'heure,
- la durée maximum de stationnement,
- la périodicité des débits d'unités,
- le montant de chaque débit d'unité.

Jusqu'à présent, dans certains dispositifs existants, tous les tarifs sont encodés dans la mémoire du boîtier. Après la mise en place de la carte dans le boîtier, l'usager doit ensuite choisir, par l'intermédiaire d'un clavier, le tarif correspondant à sa zone de stationnement. Ce tarif lui est rappelé, par exemple, par un panneau ou par une signalisation au sol.

Ce système antérieur présente toutefois un certain nombre d'inconvénients. Les tarifs sont encodés dans la mémoire du boîtier, et chaque collectivité locale a sa propre politique de stationnement. Par conséquent, le boîtier doit être différent pour chaque collectivité locale.

Un autre problème tient au fait que les montants financiers correspondant aux temps de stationnement, dans une ville donnée, doivent être perçus par la collectivité locale où le stationnement a eu lieu.

Pour résoudre ce problème, on peut tout d'abord décider qu'une carte donnée est propre à une collectivité locale prédéterminée, qui en a l'exclusivité de la vente.

Cette première solution ne résoud toutefois pas le problème qu'il est nécessaire de pourvoir l'automobiliste d'un nouveau boîtier à chaque fois qu'il veut stationner dans une nouvelle ville.

Une autre solution connue consiste à permettre à l'automobiliste d'utiliser une carte unique valable dans n'importe quelle collectivité locale. A cet effet, on a pu prévoir un système de compensation permettant de répartir les sommes provenant de la vente des cartes entre les différentes collectivités locales en fonction de l'utilisation réelle des cartes vendues, par exemple en fonction du nombre total d'unités consommées dans chaque collectivité locale.

Cette seconde solution qui ne nécessite qu'un seul type de carte apparaît complexe à mettre en oeuvre du fait qu'elle impose un traitement complémentaire des cartes après leur utilisation. De plus, elle oblige toujours l'usager, amené à se déplacer dans plusieurs villes, à se munir de plusieurs boîtiers, ce qui semble également difficilement acceptable.

L'invention a notamment pour objectif de pallier ces différents inconvénients de la technique.

Plus précisément, un objectif de l'invention est de fournir un procédé de formatage de la mémoire d'une carte permettant l'utilisation d'un même boîtier dans des collectivités locales différentes.

Un autre objectif de l'invention est de fournir un tel procédé permettant à chaque collectivité locale de choisir librement sa politique de consommation des unités de stationnement.

L'invention a également pour objectif de fournir un tel procédé permettant d'optimiser l'utilisation de la ressource mémoire de la carte utilisée.

Un autre objectif de l'invention est de fournir un tel procédé permettant un changement aisé de politique de stationnement.

Ces objectifs, ainsi que d'autres qui apparaîtront par la suite, sont atteints selon l'invention à l'aide d'un procédé tel qu'énoncé dans la revendication 1. Les sous-revendications exposent des formes de réalisation avantageuses.

Ainsi, tous les tarifs sont encodés dans la mémoire de la carte, avec les unités consommables, et non plus dans la mémoire du boîtier. De cette façon, le boîtier n'est plus nécessairement différent pour chaque collectivité locale. Il suffit qu'une carte comporte les tarifs et le code d'une collectivité locale pour qu'elle soit valable dans cette collectivité locale.

Chaque collectivité locale vend donc ses propres cartes. Ces cartes correspondent à une politique de consommation choisie indépendamment des autres collectivités locales. Si la collectivité locale veut changer de politique de stationnement, il lui suffit de vendre de nouvelles cartes correspondant à cette nouvelle politique.

De plus, la politique de stationnement est encodée suivant un encodage de type contextuel, c'est-à-dire en développant sa description selon une structure de codage hiérarchisée de longueur variable. Ainsi, la place mémoire utilisée pour l'encodage de la politique de stationnement est fonction de la complexité de cette politique. Cela permet d'optimiser la place mémoire disponible pour les unités consommables, tant du fait du caractère très synthétique de ce type d'encodage, qu'en raison de l'ajustement précis de la longueur d'inscription de la politique à sa complexité réelle.

Enfin, la division de chaque tarif en tranches permet de créer plus facilement des tarifs tenant compte de presque toutes les possibilités. Ce large choix de tarifs forme une politique de stationnement complète.

D'autres caractéristiques et avantages de l'invention apparaîtront à la lecture de la description suivante d'un mode de réalisation préférentiel de l'invention, donné à titre d'exemple indicatif et non limitatif, et des dessins annexés dans lesquels :

- la figure 1 présente de façon schématique la mémoire d'une carte formatée suivant un premier mode de réalisation d'un procédé selon l'invention ;
- la figure 2 présente de façon schématique un formatage selon l'invention d'une sous-zone d'en-tête ;
- la figure 3 présente de façon schématique un formatage selon l'invention d'une sous-zone codant tous les tarifs d'une politique de stationnement;
- la figure 4 présente de façon schématique un formatage selon l'invention d'une sous-zone codant toutes les tranches des différents tarifs dont le codage est présenté sur la figure 3;
- la figure 5 présente de façon schématique la mémoire d'une carte formatée suivant un second mode de réalisation d'un procédé selon l'invention.

Le procédé de formatage selon l'invention est destiné au formatage de la mémoire d'un objet portatif de mémorisation d'unités consommables.

Dans la description suivante, cet objet portatif est une carte dont la mémoire est constituée d'une séquence d'éléments binaires. Cette carte permet à l'usager d'acquitter automatiquement des taxes de stationnement. Elle est prépayée par l'usager et est utilisée en coopération avec un dispositif de transfert commandant la consommation d'unités mémorisées sur la carte, selon une politique de stationnement mémorisée elle aussi sur la carte.

La description suivante présente deux modes de réalisation d'un procédé selon l'invention de formatage de la mémoire d'une telle carte.

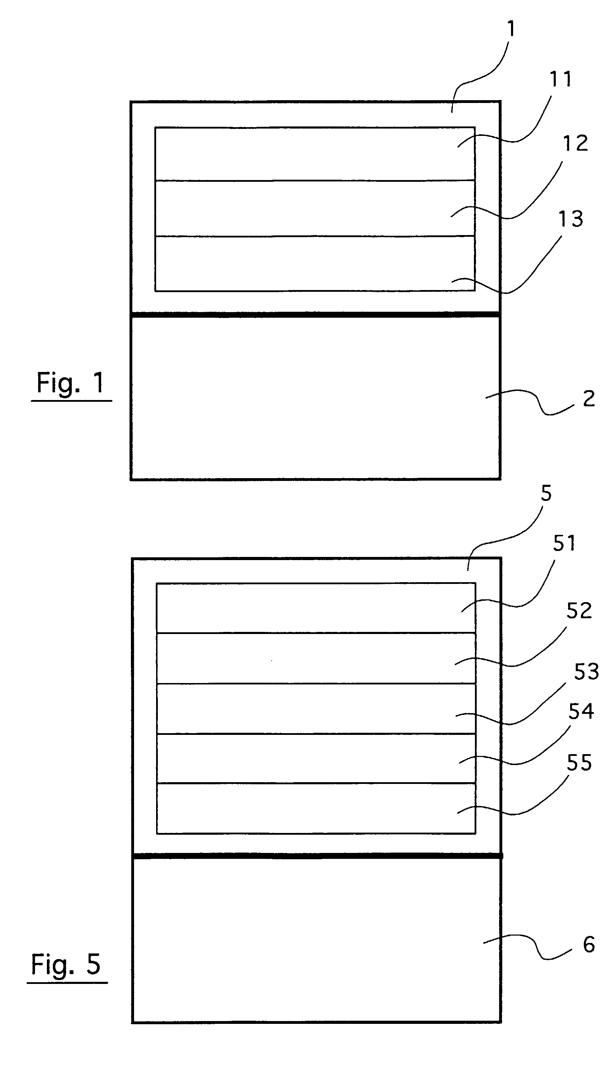

Le premier mode de réalisation est expliqué en relation avec les figures 1 à 4 et correspond à une politique de stationnement dont on trouvera la configuration synthétique complète en Tableau I.

## TABLEAU I

```
CARTE 1301, ville de: Lyon 6903-2
                        Mot de contrôle: sera calculé plus tard ...
              Bit PTT + type télécarte: 1001          $9
                                 Solaic: 1010          $A
                      Structure médiane: 1101          $D
                       Code application: 00000001      $01
                     Code ville + n° màj: 0110100100000011 $6903
                       Nombre de tarifs: 0100 soit 5 tarif(s)
                                 UT=20': 011
                              Linéarité: 1 : OUI
             Clé changée toutes les heures: 0 : NON
                     Doublement crédit: 1 : OUI
Lecture des 5 tarifs
Tarif n° 1
        Gratuité dimanche et jours fériés: 01
        Codage abrègé des heures payantes: 11100 de 9h à 19h
                      Nombre de tranches: 01    2 tranche(s)
                            n° Tranche:        tranche 0
                            n° Tranche: 1      tranche 1
    Tarif n° 2
        Jours et heures payantes à re-définir: 1
        Gratuité dimanche et jours fériés: 01
        Codage abrègé des heures payantes: 11101 de 9h à 19h sf 12-14h
                      Nombre de tranches: 01    2 tranche(s)
                            n° Tranche: 10     tranche 2
                            n° Tranche: 11     tranche 3
    Tarif n° 3
        Jours et heures payantes identiques: 0
                      Nombre de tranches: 01    2 tranche(s)
                            n° Tranche: 100    tranche 4
                            n° Tranche: 101    tranche 5
    Tarif n° 4
        Jours et heures payantes identiques: 0
                      Nombre de tranches: 10    3 tranche(s)
                            n° Tranche: 110    tranche 6
                            n° Tranche: 111    tranche 7
                            n° Tranche: 1000 tranche 8
    Tarif n° 5
        Jours et heures payantes à re-définir: 1
               Tous les jours sont payants: 00
        Codage abrègé des heures payantes: 11100 de 9h à 19h
                      Nombre de tranches: 10    3 tranche(s)
                        ( n° Tranche: 1001 tranche 9
                          n° Tranche: 1010 tranche 10
                          n° Tranche: 1011 tranche 11
```

## TABLEAU I (suite)

```
Lecture des 12 tranches
Tranche n° 0
                        Nombre de périodes: 11    (3 période(s))
                                   Période: 01    (1 u.t.)
                        Montant du paiement: 011    (3 unité(s))
Tranche n° 1
                        Nombre de périodes: 01    (1 période(s))
                                   Période: 11    (3 u.t.)
                        Montant du paiement: 111010   (8 unité(s))
Tranche n° 2
                        Nombre de périodes: 01    (1 période(s))
                                   Période: 000101   (5 u.t.)
                        Montant du paiement: 111011   (9 unité(s))
Tranche n° 3
                        Nombre de périodes: 10    (2 période(s))
                                   Période: 10    (2 u.t.)
                        Montant du paiement: 100    (4 unité(s))
Tranche n° 4
                        Nombre de périodes: 10    (2 période(s))
                                   Période: 11    (3 u.t.)
                        Montant du paiement: 100    (4 unité(s))
Tranche n° 5
                        Nombre de périodes: 11    (3 période(s))
                                   Période: 000110   (6 u.t.)
                        Montant du paiement: 001    (1 unité(s))
Tranche n° 6
                        Nombre de périodes: 10    (2 période(s))
                                   Période: 01    (1 u.t.)
                        Montant du paiement: 111000   (6 unité(s))
Tranche n° 7
                        Nombre de périodes: 001001   (13 période(s))
                                   Période: 01    (1 u.t.)
                        Montant du paiement: 000    (0 unité(s))
Tranche n° 8
                        Nombre de périodes: 01    (1 période(s))
                                   Forfait: 000000 (type 1)
                     .. en HEURES payantes: 00010 (3 heure(s))
                        Montant du paiement: 010    (2 unité(s))
Tranche n° 9
                        Nombre de périodes: 11    (3 période(s))
                                   Période: 11    (3 u.t.)
                        Montant du paiement: 101    (5 unité(s))
Tranche n° 10
                        Nombre de périodes: 01    (1 période(s))
                                   Période: 11    (3 u.t.)
                        Montant du paiement: 000    (0 unité(s))
Tranche n° 11
                        Nombre de périodes: 01    (1 période(s))
                                   Forfait: 000000 (type 1)
                     .. en HEURES payantes: 00101 (6 heure(s))
                        Montant du paiement: 111100   (15 unité(s))


CARTE 1301: on est arrivé au bit 416 sur un maximum de 416
Le mot de contrôle vaut 123 = $7B.
```

Le second mode de réalisation est expliqué en relation avec la figure 5 et diffère du premier mode de réalisation par la façon de coder les périodes payantes et les périodes gratuites en fonction du jour et de l'heure.

Quel que soit le mode de réalisation, le procédé de formatage selon l'invention permet de réduire le nombre d'éléments binaires permettant de coder la politique de stationnement. Cela permet de disposer d'un nombre plus élevé d'éléments binaires dans la zone de mémorisation d'unités consommables.

Ainsi, lorsque des éléments (tels que les tranches, les modèles hebdomadaires et les modèles journaliers, expliqués par la suite) doivent être numérotés, la numérotation se fait dans l'ordre où apparaissent ces éléments. Tant qu'un élément de numéro $2^n$-1 n'est pas apparu, n éléments binaires (notés e.b.) suffisent pour décrire le numéro suivant. Quand un élément de numéro $2^n$-1 apparaît, il faut n+1 e.b. pour décrire le numéro suivant.

Par exemple, la suite de numéros [ 1, 2, 3, 4, 5, 6] est codée [ 1, 10, 11, 100, 101, 110].

De même, la suite de numéros [ 1, 2, 1, 3, 1] est codée [ 1, 10, 01, 11, 001]. Le deuxième numéro 1 est codé sur n = 2 e.b. (01) car le numéro précédent (2), codé sur n=2 e.b. (10), n'est pas égal à $2^n$-1. Par contre, le troisième numéro 1 est codé sur n+1 e.b. (001) car le numéro précédent (3), codé sur n = 2 e.b. (11), est égal à $2^n$-1.

La figure 1 présente de façon schématique la mémoire d'une carte du type comprenant 416 éléments binaires, formatée suivant un premier mode de réalisation d'un procédé selon l'invention.

La mémoire comprend une première zone 1 d'encodage de la politique de stationnement et une seconde zone 2 de mémorisation d'unités consommables.

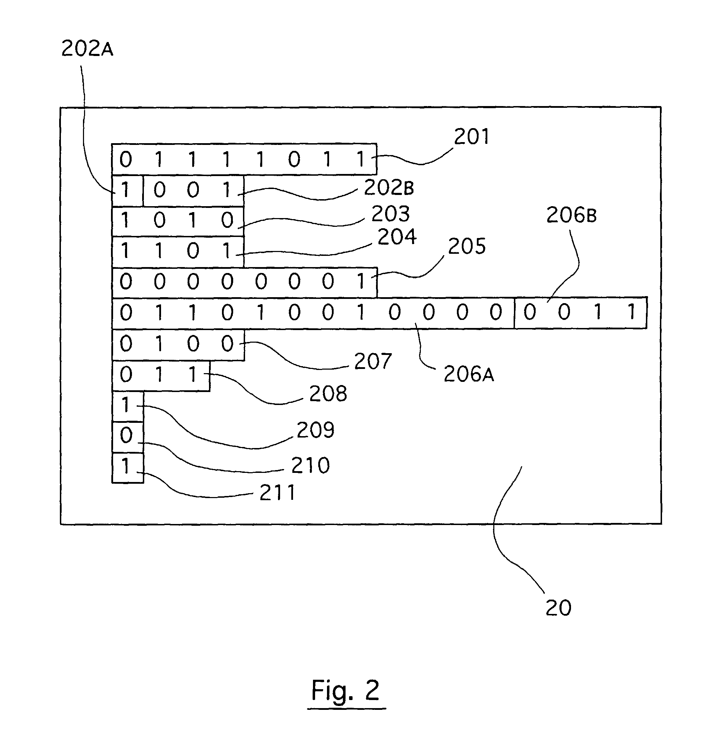

La première zone 1 d'encodage de la politique de stationnement comprend trois sous-zones. Ces trois sous-zones sont présentées sur les figures 2, 3 et 4 et correspondent respectivement à :

- une sous-zone 11 d'en-tête,
- une sous-zone 12 codant tous les tarifs d'une politique de stationnement,
- une sous-zone 13 codant toutes les tranches des différents tarifs présentés auparavant.

Lors de l'implémentation physique, les unités consommables de la seconde zone peuvent être intercalées entre ces différentes sous-zones 11, 12, 13 de la première zone d'encodage de la politique de stationnement.

Dans la sous-zone 11,20 d'en-tête, présentée sur la figure 2, divers paramètres globaux ou options sont codés sur 54 e.b. au total.

- Une information 201 de contrôle de l'intégrité de la carte, correspondant au nombre d'éléments binaires 0 dans le reste de la zone d'encodage de la politique de stationnement. Ce nombre est codé sur 8 e.b.
- Une information $202_A$ d'origine de la carte, codée sur 1 e.b (e.b. PTT).
- Une information $202_B$ du type de la carte, codée sur 3 e.b.
- Une information 203 du constructeur de la carte, codée sur 4 e.b.
- Une information 204 du nombre d'e.b. disponibles à la consommation, codée sur 4 e.b. Dans cette description, la carte comprend 416 e.b. au total des deux zones, dont 168 affectés à la zone 2 de mémorisation d'unités consommables.
- Une information 205 d'application codée sur 8 e.b.
- Une information 206A d'identification de la zone géographique de validité de la carte, codée sur 12 e.b. Cette zone géographique est généralement une ville ou une collectivité locale.
- Une information 206B de mise à jour de la politique de stationnement, codée sur 4 e.b.
- Une information 207 du nombre de tarifs existants dans la politique de stationnement, codée sur 4 e.b.
- Une information 208 pour définir l'unité de temps utilisée par la suite dans la définition de la périodicité des débits. Cette information est codée sur 3 e.b. de la façon suivante :

  - 000 pour 5 minutes (mn par la suite),
  - 001 pour 10 mn,
  - 010 pour 15 mn,
  - 011 pour 20 mn,
  - 100 pour 30 mn,
  - 101 pour 1 heure,
  - 110 pour 4 mn,
  - 111 pour 6 mn.

- Une information 209 de linéarité codée sur 1 e.b. Si l'option de linéarité est choisie, le dispositif de transfert commandant la consommation conserve les fractions d'unités (ou d'e.b. si un e.b. correspond à plusieurs unités) non consommées lors de l'arrêt du stationnement.
- Une information 210 de changement de clé de verrouillage de la carte. Ce changement est effectué toutes les heures si cette option est choisie. L'information est codée sur 1 e.b.

- Une information 211 de doublement du crédit d'unités consommables, codée sur 1 e.b.

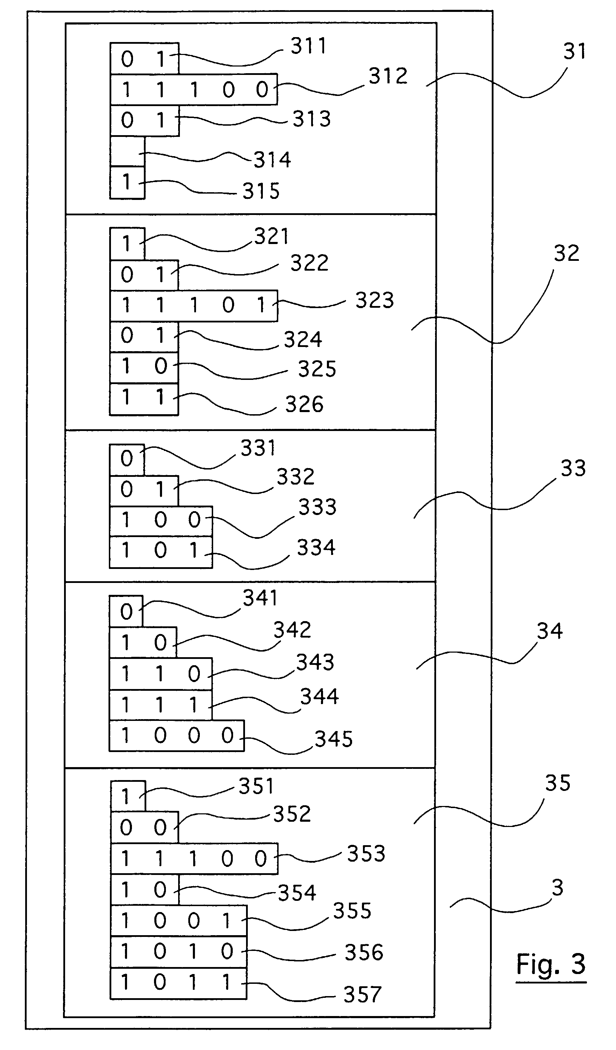

La figure 3 présente de façon schématique un formatage selon l'invention d'une sous-zone 12,3 codant tous les tarifs d'une politique de stationnement. La politique de stationnement, d'après l'information 207 comprend 5 tarifs. La sous-zone 3 correspond donc au codage de ces 5 tarifs. Chaque tarif est codé dans une sous-zone 31 à 35.

Le codage d'un tarif consiste à décrire :

- le nombre de tranches du tarif,
- le numéro de chacune de ces tranches,
- les périodes payantes et gratuites, en fonction du jour et de l'heure.

Le premier tarif 31 décrit obligatoirement les périodes (jours, heures) gratuites. Pour tous les tarifs 32 à 35 qui suivent, un premier e.b. vaut 0 si ces périodes sont inchangées par rapport au premier tarif, ou vaut 1 s'il est nécessaire de procéder à une nouvelle description des périodes gratuites.

Cette nouvelle description sera faite dans le même format.

Le codage des jours gratuits se fait sur 2 ou 10 e.b. de la façon suivante :

- si tous les jours sont payants, on code 00 ;
- si le stationnement est gratuit le dimanche et les jours fériés, on code 01;
- si le stationnement est gratuit le samedi, le dimanche et les jours fériés, on code 11 ;
- dans les autres cas, on code 10 xxxxxxxyoù les 7 e.b. xxxxxxxdéfinissent, pour chacun des 7 jours de la semaine, ceux qui sont gratuits (valeur 1). Le premier e.b. à gauche est relatif au dimanche, le deuxième au lundi, etc... Le huitième e.b. "y"vaut 1 si les jours fériés sont gratuits.

Concernant les jours fériés, le dispositif de transfert prend en compte tous les jours fériés définis au niveau national dans la mémoire assistée (EEPROM, par exemple). Cette mémoire contient également un e.b. qui indique s'il est pertinent de prendre en compte le changement d'horaire en été.

Le codage des heures gratuites se fait sur 5, 9 ou 18 e.b., de la façon suivante :

- heure de début de période payante le matin :

  . 7 heures est codé 01,
  . 8 heures est codé 10,
  . 9 heures est codé 11,
  . les autres cas sont codés 00 $q_0$ [$q_1 q_2 q_3$] (cf explication ci-dessous).

- heure de fin de période payante le soir (sauf "autres cas" pour l'heure de début de période payante le matin) :

  . 17 heures est codé 00,
  . 18 heures est codé 01,
  . 19 heures est codé 10,
  . 20 heures est codé 11.

- période gratuite de milieu de journée (sauf "autres cas" pour l'heure de début de période payante le matin) :

  . s'il n'y a pas de période gratuite, on code 0,
  . si le stationnement est gratuit entre 12 heures et 14 heures, on code 1.

Dans tous les cas précédents, le codage des heures gratuites se fait sur 5 e.b. (2 e.b. pour l'heure de début de période payante, 2 e.b. pour l'heure de fin de période payante, et 1 e.b. pour la période gratuite de milieu de journée).

Deux autres cas sont prévus.

Dans le premier cas, l'heure de début de période payante le matin n'est pas une des heures proposées (7, 8 ou 9 heures). On code alors l'heure désirée : 00 $q_0$, où $q_0$ est un quartet d'e.b. qui représente un nombre compris entre 0 et 15, et qui permet de calculer l'heure $H_0$ de début de période payante le matin à l'aide de la formule :

$$H_0 = 06h + (q_0 \text{ x } 30 \text{ mn}).$$

($H_0$ est comprise entre 6 h et 13 h 30)

Dans ce premier cas, le codage des heures gratuites se fait sur 9 e.b. (6 e.b. pour l'heure de début de période payante, 2 e.b. pour l'heure de fin de période payante et 1 e.b. pour la période gratuite de milieu de journée).

Dans le second cas, on redéfinit :

- l'heure $H_0$ de début de période payante le matin :

$$H_0 = 06 \text{ h} + (q_0 \text{ x } 30 \text{ mn})$$

($H_0$ comprise entre 6 h et 13 h 30),
- l'heure $H_1$ de début de période gratuite de milieu de journée:

$$H_1 = 11 \text{ h} + (q_1 \text{ x } 30 \text{ mn})$$

($H_1$ comprise entre 11 h et 18 h 30),
- l'heure $H_2$ de fin de période gratuite de milieu de journée :

$$H_2 = 12 \text{ h} + (q_2 \text{ x } 30 \text{ mn})$$

($H_2$ comprise entre 12 h et 19 h 30),
- l'heure $H_3$ de fin de période payante le soir :

$$H_3 = 15 \text{ h} + (q_3 \text{ x } 30 \text{ mn})$$

($H_3$ comprise entre 15 h et 22 h 30).

$q_0$, $q_1$, $q_2$ et $q_3$ sont des quartets d'e.b.

Quatre cas particuliers sont prévus :

- si $H_1 < H_0$, le stationnement est payant 24 h/24, $q_2$ et $q_3$ ne sont pas lus,
- si $H_1 = H_0$, le stationnement est payant seulement de $H_2$ à $H_3$,
- si $H_2 < H_3$, pas de période gratuite en milieu de journée (le cas $H_1 = H_2$ est interdit),
- si $H_3 < H_2$, le stationnement est payant seulement de $H_0$ à $H_1$ (le cas $H_3 = H_2$ est interdit).

Dans ce second cas, y compris les quatre cas particuliers, le codage des heures gratuites est donc : 00 $q_0q_1q_2q_3$, soit un total de 18 e.b.

Après la définition des périodes (jours et heures) gratuites, chaque tarif comprend également :

- le nombre de tranches du tarif, codé sur 2 e.b. pour un nombre compris entre 1 et 4 ;
- le numéro de chacune des tranches du tarif. Les tranches sont numérotées dans l'ordre où elles apparaissent. La première tranche numérotée 0 n'est pas codée, ensuite les numéros de tranche sont codés à l'aide d'un nombre croissant d'e.b. (les numéros 1, 2, 3, 4, 5, ...sont codés 1, 10, 11, 100, 101...).

Ainsi, l'exemple présenté en figure 3, correspond à une politique de 5 tarifs 31 à 35.

Le premier tarif 31 définit les jours et heures gratuits. Le codage 01 des jours gratuits 311 signifie que le stationnement est gratuit le dimanche et les jours fériés. Le codage 11100 des heures gratuites 312 signifie que :

- l'heure de début de période payante le matin est 9 h (codée 11),
- l'heure de fin de période payante le soir est 19 h (codée 10),
- il n'y a pas de période gratuite en milieu de journée (codée 0).

Dans ce premier tarif 31, il y a 2 tranches (zone 313 codée 01) numérotées 0 (zone 314 vide) et 1 (zone codée 1).

Le second tarif 32 a son premier e.b. 321 codé 1, ce qui signifie qu'une nouvelle description des périodes gratuites va suivre. Dans cette nouvelle description, le codage 01 des jours gratuits 322 est le même que précédemment. Par contre, le codage 11101 des heures gratuites 323 est légèrement différent. Le dernier e.b. est 1, il y a donc une période gratuite entre 12 h et 14 h.

Dans ce second tarif 32, il y a 2 tranches (zone 324 codée 01) numérotées 2 (zone 325 codée 10) et 3 (zone 326 codée 11).

Le troisième tarif 33 a son premier e.b. 331 codé 0, ce qui signifie que les périodes gratuites sont inchangées par rapport au premier tarif 31. Ce troisième tarif comprend 2 tranches (zone 332 codée 10) numérotées 4 (zone 333 codée 100) et 5 (zone 334 codée 101).

Le quatrième tarif 34 a les mêmes périodes gratuites que le premier tarif 31 (zone 341 codée 0), il comprend 3 tranches (zone 342 codée 10) numérotées 6 (zone 342 codée 110), 7 (zone 344 codée 111) et 8 (zone 345 codée 1000).

Le cinquième tarif 35 a son premier e.b. 351 codé 1, ce qui signifie qu'une nouvelle description des périodes gratuites va suivre. Le codage 00 (zone 352) signifie que le stationnement est payant tous les jours. Le codage 11100 des heures gratuites 353 est le même que le premier tarif 31. Le cinquième tarif 35 comprend 3 tranches (zone 354 codée 10) numérotées 9 (zone 355 codée 1001), 10 (zone 356 codée 1010) et 11 (zone 357 codée 1011).

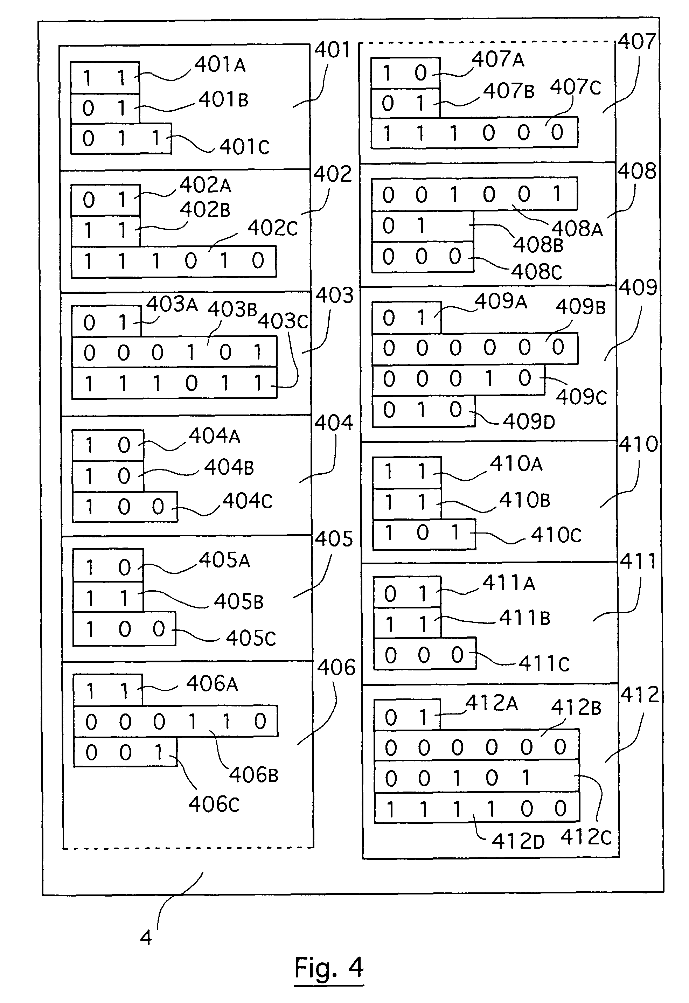

La figure 4 présente de façon schématique un formatage selon l'invention d'une sous-zone 12,4 codant les 12 tranches numérotées 0 à 11 des 5 tarifs dont le codage a été présenté sur la figure 3.

Le codage d'une tranche consiste à décrire :

- la durée de la tranche. Cette durée est un multiple de la durée d'une période (définie dans le point suivant).
- la durée d'une période. Cette durée est définie soit comme un multiple de l'unité de temps (définie dans la sous-zone d'en-tête), soit comme une durée forfaitaire. Cette période correspond à l'intervalle de temps séparant deux débits successifs.
- le montant de chaque débit en unités consommables.

La durée d'une tranche peut varier entre 1 et 18 périodes, ou être illimitée. On code la durée d'une tranche de la façon suivante :

- 01 pour 1 période,
- 10 pour 2 périodes,
- 11 pour 3 périodes,
- 00 xxxx pour les autres cas. Les 4 e.b. xxxx correspondent à l'écriture binaire d'un nombre X compris entre 0 et 15.

Si X est compris entre 0 et 14, la durée D de la tranche est calculée à l'aide de la formule : $D = (X + 4)$ périodes.
Si $X = 15$, la durée de la tranche est illimitée.
La durée d'une tranche est donc codée sur 2 e.b. pour les trois premiers cas et sur 6 e.b. pour les autres cas.
La durée d'une période peut varier entre 1 et 15 unités de temps, ou être supérieure à 15 unités de temps s'il s'agit d'un forfait. On code la durée d'une période de la façon suivante :

- 01 pour 1 unité de temps ;
- 10 pour 2 unités de temps ;
- 11 pour 3 unités de temps ;
- 00 xxxx pour une durée de X unités de temps si $X \geqq 4$ (avec xxxx l'écriture binaire du nombre X) ;
- 00 0000 yyyyy pour un forfait d'une durée de Y heures, avec yyyyy l'écriture binaire du nombre Y. Y est compris entre 1 et 32 ;
- 00 0001 pour un forfait de 24 heures solaires, excepté les jours entièrement gratuits ;
- 00 0010 pour un forfait jusqu'à la fin de la journée en cours ;
- 00 0011 pour un forfait jusqu'à la fin de la "demi-journée" en cours.

La durée d'une période est donc codée sur 2, 6 ou 11 e.b. suivant les cas.
Le montant d'un débit est donné en unités consommables et est codé de la façon suivante :

- 000 pour 0 unité (cas correspondant au stationnement gratuit) ;
- 001 pour 1 unité ;
- 010 pour 2 unités ;
- 011 pour 3 unités ;
- 100 pour 4 unités ;
- 101 pour 5 unités ;
- 110 pour 10 unités ;
- 111 0yy pour un montant $M_1$ compris entre 6 et 9 unités, calculé à l'aide de la formule :

$$M_1 = 6 + yy$$

où yy est l'écriture binaire d'un nombre compris entre 0 et 3 ;
- 111 100 pour 15 unités ;
- 111 101 pour 20 unités ;
- 111 110 pour 25 unités ;
- 111 111 zz pour un montant $M_2$ calculé à l'aide de la formule :

$$M_2 = 15 + R$$

où R prend les valeurs 15, 20, 25 lorsque le couple d'e.b. zz prend respectivement les valeurs 00, 01, 10.

Lorsque la durée d'une période est une durée forfaitaire, la tranche correspondante ne sera suivie d'aucune tranche pour le tarif en question. Le débit en sera réalisé en une seule fois, sans considération pour l'option de linéarité. Le caractère forfaitaire d'un tarif peut se révéler dès la première tranche (qui, par conséquent, est alors unique), ou alors lors d'une tranche ultérieure (cette tranche "ultérieure" étant donc alors la dernière).

En cas d'interruption du stationnement par retrait de la carte, le "ticket" du forfait est mémorisé (jusqu'à ce qu'un autre ticket de forfait vienne éventuellement le masquer). Ainsi, l'automobiliste peut reprendre par la suite le stationnement forfaitaire sans avoir à payer un supplément. Il lui suffit alors de réintroduire la carte et de resélectionner le ticket mémorisé (qui sera affecté d'un code spécial).

Le forfait sera renouvelable si la durée d'une tranche est codée comme étant supérieure à une période. Dans ce cas, le renouvellement sera toujours illimité, et, par exception, le processus de stationnement repartira dès la première tranche.

Dans l'exemple présenté sur la figure 4, la sous-zone 4 comprend 12 tranches 401 à 412. Seules sont commentées dans la description suivante les tranches n° 6, 7 et 8 du quatrième tarif 34.

* La définition 407 de la tranche n° 6 indique que :

  - celle-ci a une durée de 2 périodes (zone $407_A$ codée 10),
  - la durée d'une période est 1 unité de temps, soit 20 minutes, (zone $407_B$ codée 01),
  - le montant d'un débit pour une période est 6 unités (zone $407_C$ codée 111 000).

* La définition 408 de la tranche n° 7 indique que

  - celle-ci a une durée de 13 périodes (zone $408_A$ codée 001001),
  - la durée d'une période est 1 unité de temps, soit 20 minutes, (zone $408_B$ codée 01),
  - le montant d'un débit pour une période est 0 unité (zone $408_C$ codée 000), le stationnement est donc gratuit pendant cette tranche.

* La définition 409 de la tranche n° 8 indique que :

  - la durée de la tranche est codée comme étant égale à 1 période (zone $409_A$ codée 01),
  - la durée d'une période (zones $409_B$ et $409_C$ codées 000 000 et 00010) est un forfait pour 3 heures, d'après le point précédent (1 période pour la durée de la tranche) ce forfait n'est pas renouvelable,
  - le montant d'un débit pour une période est 2 unités (zone $407_D$ codée 010).

En résumé, le quatrième tarif 34 correspond à un stationnement gratuit le dimanche et les jours fériés et payant entre 9 h et 19 h les autres jours.

Avec ce tarif, un automobiliste peut laisser sa voiture en stationnement :

- pendant 40 mn (2 unités de temps de 20 mn) avec un débit de 6 unités toutes les 20 mn,
- puis pendant 4 h 20 mn (13 unités de temps de 20 mn) gratuitement,
- et enfin pendant 3 h avec un débit forfaitaire de 2 unités.

La figure 5 présente de façon schématique la mémoire d'une carte formatée suivant un second mode de réalisation d'un procédé selon l'invention.

La mémoire comprend une première zone 5 d'encodage de la politique de stationnement et une seconde zone 6 de mémorisation d'unités consommables.

Dans ce second mode de réalisation, la première zone 5 d'encodage de la politique de stationnement comprend cinq sous-zones correspondant respectivement à :

- une sous-zone 51 d'en-tête,
- une sous-zone 52 codant tous les tarifs d'une politique de stationnement,
- une sous-zone 53 codant tous les modèles hebdomadaires des différents tarifs présentés auparavant,
- une sous-zone 54 codant tous les modèles journaliers des différents tarifs présentés auparavant,
- une sous-zone 55 codant toutes les tranches des différents tarifs présentés auparavant.

La sous-zone 51 d'en-tête est de même nature que la sous-zone 11 d'en-tête du premier mode de réalisation et comprend également une information du nombre de tarifs existants dans la politique de stationnement.

La sous-zone 52 code tous les tarifs d'une politique de stationnement, et plus précisément :

- le nombre de tranches de chacun des tarifs,
- le numéro de chacune de ces tranches,
- le numéro d'un modèle hebdomadaire pour chacun de ces tarifs.

La sous-zone 53 code tous les modèles hebdomadaires, et plus précisément :

- les jours payants et les jours gratuits d'une semaine pour chacun de ces modèles hebdomadaires,
- le numéro d'un modèle journalier pour chacun de ces jours payants.

La sous-zone 54 code tous les modèles journaliers, et plus précisément les heures payantes et les heures gratuites de ces jours payants.

La sous-zone 55 codant toutes les tranches est de même nature que la sous-zone 13 du premier mode de réalisation.

Dans le premier mode de réalisation (expliqué en relation avec les figures 1 à 4), les périodes payantes et les périodes gratuites sont codées directement dans la sous-zone 12 codant tous les tarifs.

Par contre, dans le second mode de réalisation (expliqué en relation avec la figure 5), les périodes payantes et les périodes gratuites sont codées à l'aide de deux pointeurs successifs :

- dans la seconde sous-zone, un numéro renvoie à un modèle hebdomadaire situé dans la troisième sous-zone 53,
- dans ce modèle hebdomadaire, un numéro renvoie à un modèle journalier. situé dans la quatrième sous-zone 54.

Enfin, dans les deux modes de réalisation, les tranches d'un tarif sont codées à l'aide d'un seul pointeur. Dans le premier mode de réalisation (respectivement le second mode de réalisation), les numéros de tranches codées dans la seconde sous-zone 12 (respectivement 52) renvoient à des tranches codées dans la troisième sous-zone 13 (respectivement la cinquième sous-zone 55).

Ces deux modes de réalisation montrent que l'invention est compatible avec différentes modalités d'encodage contextuel hiérarchisé, et permet donc l'encodage de politiques de stationnement tarifé très diverses, voire très complexes.

De plus, les différents tarifs qui constituent la politique de stationnement d'une collectivité locale, par exemple, peuvent être modifiés assez rapidement. Il suffit pour cela de vendre de nouvelles cartes dont on aura préalablement formaté la mémoire selon le procédé de l'invention en y inscrivant la nouvelle politique de stationnement à mettre en place.

Les deux modes de réalisation décrits ci-dessus concernent une politique de stationnement dans laquelle, lorsqu'un tarif est sélectionné, les tranches de ce tarif se succèdent séquentiellement. Une tranche de numéro n+1 succède à une tranche de numéro n seulement si une durée correspondant au nombre maximum de périodes successives de cette tranche de numéro n s'est écoulée.

Il est clair que de nombreux autres modes de réalisation de l'invention peuvent être envisagés. On peut notamment prévoir un modèle de réalisation dans lequel les tranches d'un tarif se succèdent en fonction de l'heure. Chaque tranche correspond alors à une période horaire.

**Revendications**

1. Procédé de formatage de la mémoire d'un objet portatif de mémorisation d'unités consommables, notamment d'unités de stationnement payantes, ledit objet portatif étant destiné à coopérer avec un dispositif de transfert commandant la consommation desdites unités selon une politique de stationnement tarifé prédéterminée, ladite politique comprenant au moins un tarif de consommation suivant le jour et le lieu et/ou le temps de stationnement, ledit procédé consistant à définir dans la mémoire dudit objet portatif au moins deux zones de mémorisation :

   - une première zone (1) d'encodage de ladite politique de stationnement,
   - une seconde zone (2) de mémorisation d'unités consommables,

   et à encoder ladite politique de stationnement dans ladite zone (1) d'encodage suivant un encodage contextuel hiérarchisé consistant à prévoir dans ladite zone (1) d'encodage au moins trois sous-zones hiérarchisées successives correspondant chacune à un niveau d'encodage, une première sous-zone (207) annonçant de façon codée un nombre de tarifs distincts associé à la politique de stationnement, une deuxième sous-zone (12; 3; 52) codant pour chacun desdits tarifs annoncés, un nombre de tranches distinctes (313; 324; 332; 342; 354) associé audit tarif, une troisième sous-zone (13; 4; 55) codant la logique de consommation dans le temps desdites unités consommables pour chacune desdites tranches.

2. Procédé selon la revendication 1 caractérisé en ce que ladite deuxième sous-zone comporte également :

   * un numéro d'identification pour chacune desdites tranches,
   * des périodes en fonction du jour et/ou de l'heure (311, 312, 321 , 322 , 323 , 331 , 341 , 351, 352, 353),

3. Procédé selon la revendication 2, caractérisé en ce que ladite deuxième sous-zone (52) code, pour chacun desdits tarifs, le numéro d'un modèle hebdomadaire,
   et en ce que les caractéristiques de chacun desdits modèles hebdomadaires sont codées dans une première sous-zone supplémentaire (53), située séquentiellement après ladite deuxième sous-zone (53).

4. Procédé selon la revendication 3, caractérisé en ce que chacun desdits modèles hebdomadaires est défini par :

   - les jours payants et les jours gratuits d'une semaine,
   - le numéro d'un modèle journalier, ledit modèle journalier étant défini par les heures payantes et les heures gratuites de chacun desdits jours payants, et en ce que les caractéristiques de chacun desdits modèles journaliers sont codées dans une deuxième sous-zone supplémentaire (54), située séquentiellement après ladite première sous-zone supplémentaire (53).

5. Procédé selon l'une quelconque des revendications 2 à 4, caractérisé en ce que lesdites numérotations d'identification d'éléments tels que lesdites tranches, lesdits modèles hebdomadaires ou lesdits modèles journaliers sont contextuelles, lesdits éléments étant numérotés dans l'ordre où ils apparaissent, et tant qu'un élément de numéro $2^n-1$ n'est pas apparu, n éléments binaires suffisent pour décrire le numéro suivant, et quand un élément de numéro $2^n-1$ apparaît, il faut n+1 éléments binaires pour décrire le numéro suivant.

6. Procédé selon l'une quelconque des revendications 1 à 5, caractérisé en ce que chacune desdites tranches est définie par :

   - le nombre ($401_A$ à $412_A$) maximum de périodes successives dans une même tranche, pendant lesquelles le stationnement est autorisé,
   - la périodicité ($401_B$ à $408_B$; $409_B$ et $409_C$ ; $410_B$ à $411_B$ : $412_B$ et $412_C$) des débits d'unités consommables,
   - le montant ($401_C$ à $408_C$ ; $409_D$ ; $410_C$ ; $411_C$ ; $412_D$) en unités consommables de chaque débit.

7. Procédé selon la revendication 6, caractérisé en ce que ladite période est définie comme un multiple d'une unité de temps prédéterminée.

8. Procédé selon l'une quelconque des revendications 1 à 7, caractérisé en ce que ladite première zone d'encodage de la politique de stationnement comprend également une sous-zone (11; 20) d'en-tête codant au moins un des éléments appartenant au groupe comprenant :

- une information (201) de contrôle de l'intégrité dudit objet portatif,
- une information (202$_A$) d'origine dudit objet portatif,
- une information (202$_B$) du type de composant dudit objet portatif,
- une information (203) du constructeur dudit objet portatif,
- une information (204) du nombre de bits disponibles à la consommation,
- une information (205) d'application,
- une information (206$_A$) d'identification de la zone géographique de validité dudit objet portatif,
- une information (206$_B$) de mise à jour de la politique de stationnement,
- une information (208) pour définir l'unité de temps,
- une information (209) de linéarité, ladite linéarité permettant de conserver les fractions d'unités ou d'éléments binaires quand un élément binaire peut correspondre à plusieurs unités,
- une information (210) de changement de clé de verrouillage dudit objet portatif à des intervalles de temps réguliers,
- une information (211) de doublement du crédit d'unités consommables.

9. Procédé selon l'une quelconque des revendications 1 à 8, caractérisé en ce que ladite seconde zone (2) de mémorisation d'unités consommables comprend des unités intercalées entre lesdites sous-zones (11 , 12, 13 ; 51, 52, 53, 54, 55) de la première zone (1) d'encodage de la politique de stationnement.

10. Utilisation d'un objet portatif formaté selon le procédé de l'une des revendications 7 et 8 pour la mise en oeuvre d'une politique de stationnement tarifé au moyen de cet objet portatif de mémorisation d'unités consommables destiné à coopérer avec un dispositif de transfert commandant la consommation desdites unités lors d'un stationnement correspondant à un desdits tarifs, les tranches dudit tarif se succèdent séquentiellement, une tranche de numéro n+1 succédant à une tranche de numéro n seulement si une durée correspondant au nombre maximum de périodes successives de ladite tranche de numéro n s'est écoulée.

11. Utilisation d'un objet portatif formaté selon le procédé de l'une des revendications 7 et 8 pour la mise en oeuvre d'une politique de stationnement tarifé au moyen de cet objet portatif de mémorisation d'unités consommables destiné à coopérer avec un dispositif de transfert commandant la consommation desdites unités, utilisation au cours de laquelle, lors d'un stationnement correspondant à un desdits tarifs, les tranches dudit tarif se succèdent en fonction de l'heure, chacune desdites tranches correspondant à une période horaire.

**Patentansprüche**

1. Verfahren zum Formatieren des Speichers eines tragbaren Gegenstandes zum Speichern von verbrauchbaren Einheiten, insbesondere von Einheiten zum gebührenpflichtigen Parken, wobei der tragbare Gegenstand dazu bestimmt ist, mit einer Übertragungsvorrichtung zusammenzuwirken, die den Verbrauch der Einheiten gemäß einer vorbestimmten Bestimmung zum gebührenpflichtigen Parken steuert, wobei diese Bestimmung zumindest einen Verbrauchstarif gemäß dem Tag und dem Ort und/oder der Zeit des Parkens enthält, wobei das Verfahren darin besteht, in dem Speicher des tragbaren Gegenstandes zumindest zwei Speicherbereiche zu definieren:

   - einen ersten Bereich (1) zum Kodieren der Parkbestimmungen,

   - einen zweiten Bereich (2) zum Speichern der verbrauchbaren Einheiten,

   und die Parkbestimmung in dem Bereich (1) zum Kodieren gemäß einem kontextuellen hierarchisierten Code zu kodieren, der darin besteht, in dem Bereich (1) zum Kodieren zumindest drei aufeinanderfolgende hierarchisierte Unterbereiche vorzusehen, von denen jeder einem Kodierniveau entspricht, wobei ein erster Unterbereich (207) auf kodierte Weise eine Anzahl von unterschiedlichen Tarifen, die der Parkbestimmung zugeordnet sind, ankündigt, wobei ein zweiter Unterbereich (12; 3; 52) für jeden der angekündigten Tarife eine Anzahl von unterschiedlichen Abschnitten (313; 324; 332; 342; 354) kodiert, die dem Tarif zugeordnet sind und wobei ein dritter Unterbereich (13; 4; 55) die Verbrauchslogik in der Zeit der verbrauchbaren Einheiten für jeden der Teile kodiert.

2. Verfahren gemäß Anspruch 1, dadurch gekennzeichnet, daß der zweite Unterbereich gleichfalls aufweist:

   - eine Identifikationsnummer für jeden der Abschnitte,

- Perioden in Abhängigkeit vom Tag und/oder der Stunde (311, 312, 321, 322, 323, 331, 341, 351, 352, 353).

3. Verfahren gemäß Anspruch 2, dadurch gekennzeichnet, daß der zweite Unterbereich (52) für jeden der Tarife die Nummer eines wöchentlichen Modells kodiert,
und daß die Merkmale jedes dieser wöchentlichen Modelle in einem ersten zusätzlichen Unterbereich (53) kodiert sind, der sich sequentiell nach dem zweiten Unterbereich (53) befindet.

4. Verfahren gemäß Anspruch 3, dadurch gekennzeichnet, daß jedes der wöchentlichen Modelle definiert ist durch:

- die gebührenpflichtigen Tage und die gebührenfreien Tage einer Woche,

- die Nummer eines täglichen Modells, wobei das tägliche Modell durch die gebührenpflichtigen Stunden und die gebührenfreien Stunden jedes gebührenpflichtigen Tages definiert ist,

und dadurch, daß jedes der täglichen Modelle in einem zweiten zusätzlichen Unterbereich (54) kodiert ist, der sich sequentiell nach dem ersten zusätzlichen Unterbereich (53) befindet.

5. Verfahren gemäß einem der Ansprüche 2 bis 4, dadurch gekennzeichnet, daß die Identifikationsnummerierungen der Elemente, wie z. B. der Abschnitte, der wöchentlichen Modelle oder der täglichen Modelle kontextuell sind, wobei die Elemente in der Reihenfolge ihrer Erscheinung nummeriert sind, und wobei, solange ein Element mit der Nummer $2^n-1$ nicht erschienen ist, n binäre Elemente ausreichen, um die folgende Nummer zu beschreiben, und wobei man, wenn ein Element mit der Nummer $2^n-1$ erscheint, n+1 binäre Elemente benötigt, um die folgende Nummer zu beschreiben.

6. Verfahren gemäß einem der Ansprüche 1 bis 5, dadurch gekennzeichnet, daß jeder der Abschnitte definiert ist durch:

- die maximale Anzahl ($401_A$ bis $412_A$) der aufeinanderfolgenden Perioden in einem gleichen Abschnitt, während denen das Parken erlaubt ist,

- die Periodizität ($401_B$ bis $408_B$; $409_B$ und $409_C$; $410_B$ bis $411_B$; $412_B$ und $412_C$) der Abbuchung der verbrauchbaren Einheiten,

- den Betrag ($401_C$ bis $408_C$; $409_D$; $410_C$; $411_C$; $412_D$) in verbrauchbaren Einheiten jeder Abbuchung.

7. Verfahren gemäß Anspruch 6, dadurch gekennzeichnet, daß die Periode als ein Vielfaches einer vorbestimmten Zeiteinheit definiert ist.

8. Verfahren gemäß einem der Ansprüche 1 bis 7, dadurch gekennzeichnet, daß jeder erste Bereich zum Kodieren der Parkbestimmungen gleichfalls einen Unterbereich (11; 20) mit einem Kopfteil aufweist, der zumindest eines der Elemente kodiert, das zu der Gruppe gehört, die aufweist:

- eine Steuerinformation (201) über die Integrität des tragbaren Gegenstandes,

- eine Ursprungsinformation ($202_A$) des tragbaren Gegenstandes,

- eine Information ($202_B$) über den Komponententyp des tragbaren Gegenstandes,

- eine Information (203) über den Konstrukteur des tragbaren Gegenstandes,

- eine Information (204) über die Anzahl von für den Verbrauch verfügbaren Bits,

- eine Anwendungsinformation (205),

- eine Identifikationsinformation ($206_A$) für den geographischen Bereich der Gültigkeit des tragbaren Gegenstandes,

- eine Information ($206_B$) zur Aktualisierung der Parkbestimmungen,

- eine Information (208), um die Zeiteinheit zu definieren,

- eine Linearitätsinformation (209), wobei die Linearität erlaubt, Bruchteile von Einheiten oder binären Elementen zu bewahren, wenn ein binäres Element mehreren Einheiten entsprechen kann,

- eine Information (210) über die Änderung des Verriegelungsschlüssels des tragbaren Gegenstandes zu regulären Zeitintervallen,

- eine Information (211) über die Verdoppelung des Kredites an konsummierbaren Einheiten.

9. Verfahren gemäß einem der Ansprüche 1 bis 8, dadurch gekennzeichnet, daß der zweite Bereich (2) zur Speicherung von verbrauchbaren Einheiten Einheiten aufweist, die zwischen die Unterbereiche (11, 12, 13; 51, 52, 53, 54, 55) des ersten Bereiches (1) zum Kodieren der Parkbestimmungen zwischengeschoben sind.

10. Verwendung eines tragbaren Gegenstandes, der gemäß dem Verfahren eines der Ansprüche 7 und 8 formatiert worden ist, für die Ausführung von Bestimmungen zum gebührenpflichtigen Parken mit Hilfe dieses tragbaren Gegenstandes zur Speicherung von verbrauchbaren Einheiten, der dazu bestimmt ist, mit einer Übertragungsvorrichtung zusammenzuwirken, die den Verbrauch der Einheiten beim Parken entsprechend einem der Tarife steuert, wobei Abschnitte des Tarifes sich sequentiell folgen und wobei ein Abschnitt mit der Nummer n+1 einem Abschnitt mit der Nummer n nur dann folgt, wenn eine Zeitdauer verstrichen ist, die der maximalen Anzahl von aufeinanderfolgenden Perioden des Abschnittes mit der Nummer n entspricht.

11. Verwendung eines tragbaren Gegenstandes, der gemäß dem Verfahren nach einem der Ansprüche 7 und 8 formatiert worden ist, für die Ausführung einer Bestimmung zum gebührenpflichtigen Parken mit Hilfe dieses tragbaren Gegenstandes zur Speicherung von verbrauchbaren Einheiten, der dazu bestimmt ist, mit einer Übertragungsvorrichtung zusammenzuwirken, die den Verbrauch der Einheiten beim Parken entsprechend einem der Tarife steuert, wobei die Abschnitte des Tarifes in Abhängigkeit von der Stunde aufeinanderfolgen und wobei jeder der Abschnitte einer Zeitperiode entspricht.

## Claims

1. Method for formatting the memory of a portable object for the storage of consumable units, in particular paying parking units, said portable object being adapted for co-operating with a transfer device controlling the consumption of said units according to a predetermined tariffed parking policy, said policy including at least a consumption tariff depending on the day and the place and/or the duration of the parking, said method consisting in defining in the memory of said portable object at least two storing areas:

- a first area (1) for encoding said parking policy,
- a second area (2) for storing consumable units,

and in encoding said parking policy in said encoding area (1) depending on a hierarchical contextual encoding consisting in providing in said encoding area (1) at least three successive hierarchical sub-areas each corresponding to an encoding level, a first sub-area (207) announcing in a coding way a number of different tariffs associated to the parking policy, a second sub-area (12; 3; 52) coding, for every said announced tariffs, a number of different ranges (313; 324; 332; 342; 354) associated to said tariff, a third sub-area (13; 4; 55) coding the logic of time-consumption of said consumable units for every said range.

2. Method according to claim 1, characterised in that said second sub-area also includes:

* an identification number for every said range,
* periods depending on the day and/or the hour (311, 312, 321, 322, 323, 331, 341, 351, 352, 353).

3. Method according to claim 2, characterised in that said second sub-area (52) encodes, for every said tariff, the number of a weekly pattern,
and in that said features of every said weekly pattern are encoded in a first additional sub-area (53) located sequentially after said second sub-area (53).

**4.** Method according to claim 3, characterised in that every said weekly pattern is defined by:

- the paying days and the free days of a week,
- the number of a daily pattern, said daily pattern being defined by the paying hours and the free hours of every said paying day,

and in that the features of every said daily pattern are coded in a second additional sub-area (54) located sequentially after said first additional sub-area (53).

**5.** Method according to any one of claims 2 to 4, characterised in that said numberings of identification of elements such as said ranges, said weekly patterns or said daily patterns are contextual ones, said elements being numbered in the order they appear, and as long as an element number $2^n-1$ did not appear, n binary elements being enough to describe the following number, and when an element numbered $2^n-1$ appears, n+1 binary elements are needed to describe the following number.

**6.** Method according to any one of claims 1 to 5, characterised in that every of said ranges is defined by:

- the maximum number ($401_A$ to $412_A$) of successive periods in the same range, during which the parking is permitted,
- the periodicity ($401_B$ to $40_B$; $409_B$ to $409_C$; $410_B$ to $411_B$; $412_B$ and $412_C$) of the debitings of consumable units,
- the amount ($401_C$ to $408_C$; $409_D$; $410_C$; $411_C$; $412_D$) of every debiting, in consumable units.

**7.** Method according to claim 6, characterised in that said period is defined as a multiple of a predetermined time unit.

**8.** Method according to any one of claims 1 to 7, characterised in that said first area for encoding the parking policy further includes a header sub-area (11; 20) coding at least one of the elements of the group including:

- data (201) for controlling the integrity of said portable object,
- data ($202_A$) upon the origin of said portable object,
- data ($202_B$) upon the kind of component of said portable object,
- data (203) upon the manufacturer of said portable object,
- data (204) upon the number of bits available for consumption,
- data (205) upon the application,
- data ($206_A$) upon the identification of the geographical area of validity of said portable object,
- data ($206_B$) upon updating of the parking policy,
- data (208) for defining the time units,
- data (209) upon linearity, said linearity allowing to keep the split units or splits binary elements when a binary element may correspond to several units.
- data (210) upon the changing of the locking key of said portable object at regular time intervals,
- data (211) upon the doubling of the credit of consumable units.

**9.** Method according to any one of claims 1 to 8, characterised in that said second area (2) for storing consumable units includes units interspersed between said sub-areas (11, 12, 13; 51, 52, 53, 54, 55) of said first area (1) for encoding the parking policy.

**10.** Use of a portable object formatted according to the method of any one of claims 7 and 8 for the implementation of a policy of tariffed parking by means of said portable object for the storage of consumable units adapted for co-operating with a transfer device controlling the consumption of said units, use during which, in the course of a parking corresponding to one of said tariffs, the ranges of said tariff sequentially follow each other, a range numbered n+1 following a range number n only if a duration corresponding to the maximum number of successive periods of said range numbered n has lapsed.

**11.** Use of a portable object formatted according to the method of any one of claims 7 and 8 for the implementation of a policy of tariffed parking by means of said portable object for the storage of consumable units adapted for co-operating with a transfer device controlling the consumption of said units, use during which, in the course of a parking corresponding to one of said tariffs the ranges of said tariff follow each other depending on the hour, every said range corresponding to an hourly period.

1

11

12

13

<u>Fig. 1</u>

2

5

51

52

53

54

55

<u>Fig. 5</u>

6

**Fig. 2**

Fig. 3

Fig. 4